# EUROPÄISCHE PATENTSCHRIFT

(11) **EP 1 322 562 B1**
(45) Veröffentlichungstag und Bekanntmachung des Hinweises auf die Patenterteilung: **07.04.2004**
(21) Anmeldenummer: 01982265.9
(22) Anmeldetag: 08.09.2001
(51) Int. Cl.: C03B 35/24

(54) **VERFAHREN UND VORRICHTUNG ZUM KONTAKTLOSEN LAGERN UND TRANSPORTIEREN VON FLACHGLAS**
METHOD AND DEVICE FOR STORING AND TRANSPORTING FLAT GLASS IN A CONTACTLESS MANNER
PROCEDE ET DISPOSITIF POUR LE STOCKAGE ET LE TRANSPORT SANS CONTACT DE VERRE PLAT

(30) Priorität: 14.09.2000 DE 10045479
(43) Veröffentlichungstag der Anmeldung: 02.07.2003
(73) Patentinhaber: Schott Glas, 55122 Mainz (DE)
(72) Erfinder: LANGSDORF, Andreas, 55218 Ingelheim (DE); SPRENGARD, Rüdiger, 55122 Mainz-Gonsenheim (DE); NÜTTGENS, Sybill, 60316 Frankfurt/Main (DE); LANGE, Ulrich, 55118 Mainz (DE)
(74) Vertreter: Fuchs Mehler Weiss & Fritzsche
(86) Internationale Anmeldenummer: PCT/EP2001/010379
(87) Internationale Veröffentlichungsnummer: WO 2002/022514

(56) Entgegenhaltungen:
- EP-A- 0 010 854
- EP-A- 0 578 542
- DE-U- 29 817 177
- DE-U- 29 902 433
- US-A- 3 607 198
- US-A- 3 665 730
- US-A- 5 078 775

## Beschreibung

Die Erfindung betrifft ein Verfahren zum kontaktlosen Lagern und Transportieren von heißem Flachglas bei der Glasherstellung auf einem Gasbett, das über einer gasdurchlässigen Auflagefläche einer Unterlage aufgebaut wird, indem ein Gas durch die Auflagefläche hindurchgeleitet wird.

Die Erfindung betrifft ferner eine Vorrichtung zum Durchführen dieses Verfahrens.

Beim herkömmlichen, typischerweise in der Praxis verwendeten Keramisierungsprozeß von Glas liegt das zu keramisierende Glas, typischerweise in Form eines plattenförmigen Grünglaskörpers, auf einer festen Unterlage auf. Da während des Keramisierungsprozesses Temperaturen bzw. Viskositäten erreicht werden, bei denen die Glasoberfläche durch mechanischen Kontakt mit der Unterlage gestört werden kann, entstehen punktförmige Klebeabdrücke, sogenannte "Pits" auf der Glasunterseite. Durch einen Schrumpfungsprozeß während der Keramisierung tritt zusätzlich eine Relativbewegung zwischen aufliegendem Glas und Unterlage auf, so daß Kratzer auf der Glasoberfläche entstehen.

Diese durch den Kontakt der Grünglasplatte mit der festen Unterlage bedingten Nachteile führen zu der Überlegung, Prinzipien aus der Floatglas-Herstellung anzuwenden. Zu beachten ist jedoch dabei, daß sich der Keramisierungsprozeß vom üblichen Floatglastemperprozeß dadurch unterscheidet, daß wesentlich höhere Temperaturen benötigt werden, in der Regel bis etwa 950° C, in besonderen Fällen jedoch auch bis 1250° C, statt etwa 500° C - 700° C im Falle von Temper- und Biegeöfen für Floatglas, und zusätzlich eine Temperaturhomogenität im Bereich von wenigen Kelvin gewährleistet sein muß, um Verformungen der Glaskeramik zu verhindern.

Es ist bekannt, Glas kontaktlos zu keramisieren, indem der zu keramisierende Grünglasformkörper auf einem Gasbett gehaltert wird, bei dem das tragende Gas, in der Regel Luft, aus einer durchlässigen Unterlage strömt und ein tragendes Luftbett zwischen dieser Unterlage und dem Grünglasformkörper aufbaut. Da der direkte Kontakt zwischen einer festen Unterlage und dem Grünglaskörper fehlt, können vorgenannte Nachteile nicht auftreten.

Die GB 1,383,202 zeigt eine entsprechende Vorrichtung zum kontaktlosen Keramisieren einer Grünglasplatte auf einem Luftbett. Diese bekannte Vorrichtung ist allerdings mit verschiedenen Nachteilen behaftet, die daraus resultieren, daß ausschließlich mit einer Zuluftversorgung, d.h. ohne Abluft, durch die Unterlage gearbeitet wird und die Zuluft durch perforierte Platten zugeführt wird. Bei üblichen Perforationen wird hierbei eine vergleichsweise hohe Permeabilität erzeugt:

Rechnungen ergeben, daß hierbei im Mittelbereich der zu keramisierenden Grünglasplatte die Gasgeschwindigkeit nahezu Null ist und ein sozusagen "statischer" Druck erzeugt wird. Ein Gasfluß entsteht dabei im wesentlichen nur in Plattenrandnähe. Im Gegensatz zu dem Druck im Randbereich ist der statische Druck in Plattenmitte indifferent gegenüber Störungen in der Dicke des Gasfilms. Es besteht also kein Rückstellmoment gegenüber geometrischen Abweichungen der Platten von der Ebenheit bzw. der jeweils gewünschten Form. Der gleiche Zusammenhang führt dazu, daß die Dicke des Gasfilms sehr empfindlich von der Größe des Vordrucks und anderen Prozeßparametern abhängt. Störungen in diesen Parametern können daher zu Plattenverbiegungen führen.

Die US 3,607,198 zeigt eine Vorrichtung zum kontaktlosen Haltern und Transportieren einer heißen Glasplatte auf einem Luftkissen, das oberhalb einer festen Unterlage aufgebaut wird. Dabei werden alternierend entlang des Transportweges über Zu- und Abluftschlitze Zonen mit statischem und dynamischem Gasdruck, die sich jeweils über die gesamte Breite der Glasplatte erstrecken, erzeugt. Da hierbei die Gaszufuhr über schmale Schlitze mit großen Zwischenräumen erfolgt, ist eine lokal sehr inhomogene Gasversorgung die Folge, die wiederum - durch den Wechsel von Zonen hoher und niedriger Gasgeschwindigkeit - eine homogene Temperaturführung im Glas erschwert. Darüber hinaus wird mit einer aufwendigen Konstruktion gearbeitet, die aus Materialgründen nicht für den Einsatz im Bereich von Temperaturen um 950° C, und erst recht nicht für höhere Temperaturen bis etwa 1250° C, die für die Keramisierung notwendig sein können, geeignet ist.

Die US 5,078,775 zeigt ebenfalls eine Vorrichtung zum kontaktlosen Haltern und Transportieren einer Flachglasplatte beim Tempern von Floatglas auf einem Luftkissen, das oberhalb einer festen Unterlage aufgebaut wird, die ebenfalls alternierend Zu- und Abluftschlitze aufweist. Diese bekannte Vorrichtung lehnt sich trotz Modifikationen im Detail an den Grundgedanken von US 3,607,198 mit den Zu- und Abluftschlitzen in der Unterlage an, und weist damit im Hinblick auf Keramisierungsanwendungen vergleichbare Nachteile auf.

Der Erfindung liegt die Aufgabe zugrunde, das eingangs bezeichente Verfahren zum kontaktlosen Lagern und Transportieren von Flachglas, bei dem über ein Gasbett jeglicher Kontakt des Flachglases mit der Unterlage vermieden wird, so zu führen bzw. die zugehörige Vorrichtung so auszubilden, daß eine gegenüber den bekannten Keramisierungsverfahren flache Glaskeramik mit hoher Ebenheit herstellbar ist, wobei das Transportieren ggf. auch durch eine Ofenstrecke mit vorgegebenem Temperaturprofil erfolgen kann. Gegenüber den bekannten Verfahren und Vorrichtungen zum Tempern von Floatglas über einem Luftbett soll erreicht werden, daß diese sich konstruktiv einfach im Temperaturbereich bis 950° C und höher betreiben lassen, unter Erzielung einer hohen Temperaturhomogenität.

Die Lösung dieser Aufgabe gelingt verfahrensmäßig ausgehend von dem eingangs bezeichneten Verfahren zum kontaktlosen Lagern und Transportieren von heißem Flachglas bei der Glasherstellung auf einem Gasbett, das über einer gasdurchlässigen Auflagefläche einer Unterlage aufgebaut wird, indem ein Gas durch die Auflagefläche hindurchgeleitet wird, erfindungsgemäß dadurch, daß das Gas zur Erzielung einer flächig homogenen Gaszufuhr durch beabstandete flächige poröse und/oder perforierte Segmente der Auflagefläche hindurchgepreßt wird und das Gas in den Zwischenräumen zwischen den Segmenten abgeleitet wird.

Vorrichtungsmäßig gelingt die Lösung der Aufgabe ausgehend von der eingangs bezeichneten Vorrichtung zum Durchführen der Verfahren, mit einer in einem Ofen angeordneten, gasdurchlässigen Unterlage als Auflagefläche für das kontaktlos zu lagernde und transportierende Flachglas, die einen Anschluß für die Zufuhr von unter Druck stehendem Gas besitzt, das durch die gasdurchlässige Unterlage zum Aufbau eines Gasbettes zwischen dem Flachglas und der Unterlage hindurch und danach wieder abgeleitet wird, gemäß der Erfindung dadurch, daß die Unterlage aus mehreren, beabstandet angeordneten, einzelnen Segmenten besteht, die jeweils eine poröse und/oder perforierte Auflagefläche als Gasaustrittsfläche aufweisen und zwischen denen Abluftöffnungen für das Abführen des Gases ausgebildet sind.

Durch das Ausströmen des Gases aus den flächigen, porösen und/oder perforierten Segmenten der Auflagefläche bildet sich ein Gasfilm zwischen der Auflagenfläche und dem aufliegenden Glas mit einer Druckverteilung, die parabolisch ist und keine statischen Druckzonen aufweist. Über die Zwischenräume zwischen den Segmenten kann das Gas ohne weiteres abfließen, so daß kein Gasstau in der Glasmitte entsteht, der eine Verformung des Flachglases verursachen könnte.

Gemäß einer Ausgestaltung der Erfindung wird als Gas Druckluft verwendet. Diese Ausgestaltung erlaubt eine sehr einfache Verfahrensführung mit einfachen Mitteln, da entsprechende Druckluftaggregate marktgängig sind.

Ein vorteilhaftes kontaktloses Lagern und Transportieren des heißen Flachglases ist bei einer Verfahrensführung möglich, bei der das aufliegende Glas zumindest zeitweise eine Viskosität von ≤ 10¹³ dPas entsprechend dem sogenannten oberen Kühlpunkt aufweist. Bei dem sogenannten unteren Kühlpunkt liegt die Viskosität bei ≤ 10^{14,5} dPas.

Um Flachglas mit vorgegebenen Eigenschaften zu erhalten, wird gemäß einer Ausgestaltung der Erfindung ein Verfahren durchgeführt, bei dem während der Behandlung des Glases ein definiertes aufsteigendes und/oder absteigendes Temperaturprofil durchfahren wird.

In vorteilhafter Weise wird dabei ein Temperaturprofil durchfahren, durch das das Glas auf dem Gasbett keramisiert wird. Auf diese Weise ist es möglich, mit relativ einfachen Mitteln eine Glaskeramikplatte kontaktlos zu der Unterlage herzustellen, die keine punktförmigen Klebeabdrücke und keine Kratzer auf der Unterseite hat.

Eine günstige Verfahrensführung ergibt sich dabei, wenn das Glas während der Keramisierung über dem Gasbett bewegt wird. Dadurch können Temperaturunterschiede im Ofen ausgeglichen werden.

Um die für die Keramisierung notwendige Temperaturhomogenität einzuhalten, wird gemäß einer Ausgestaltung der Erfindung vorgeheiztes Gas zum Erzeugen des Gasbettes verwendet.

Dabei erfolgt die Temperierung des Gases während der Keramisierung zumindest vorwiegend während des Durchströmens durch die porösen und/oder perforierten Auflage-Segmente, wodurch im hohen Maße die für die Keramisierung notwendige Temperaturhomogenität erreicht wird.

Damit keine Kontamination des zu keramisierenden Grünglases stattfindet, wird gemäß einer weiteren Ausgestaltung der Erfindung das Gas vorzugsweise nur über zunderfreies Material zugeführt.

Eine vorteilhafte Verfahrensführung ergibt sich, wenn der Gasdruck in den einzelnen Segmenten unabhängig voneinander zeitlich veränderlich eingestellt bzw. geregelt wird. Indem man beispielsweise einen Druckgradienten entlang der Bewegungsrichtung des Glases erzeugt, kann dadurch eine kontaktlose Bewegung des Flachglases erzeugt werden.

Mit dem Verfahren nach der Erfindung kann ein geschlossenes Glasband keramisiert werden, aber auch einzelne Platten. Dabei ist es nicht zwingend notwendig, daß die Unterseite des Glasbandes bzw. der Platten eben ist. Es ist auch denkbar, daß die Unterseite, und gegebenenfalls auch die Oberseite, des zu keramisierenden Glases oberflächenstrukturiert, z.B. genoppt ist. Auch kann insbesondere die Unterseite dekoriert sein.

Mit den Maßnahmen nach der Erfindung läßt sich ein Gasbett mit einer Schwebehöhe zwischen 30 µm und 1 - 3 mm erzeugen, das für ein kontaktloses Lagern und Transportieren von Flachglas ausreichend ist. Bevorzugt liegt der Bereich zwischen 50 µm und 1 - 3 mm.

Gemäß einer Ausgestaltung der Vorrichtung ist diese so ausgebildet, daß sich die Segmente über die gesamte Breite des zu behandelnden Flachglases erstrecken. Dadurch ist eine gleichförmige Halterung des Flachglases möglich.

Eine besonders einfache Ausgestaltung der Vorrichtung ergibt sich, wenn die Abluftöffnungen als Schlitze zwischen den Segmenten ausgebildet sind.

Eine bevorzugte Ausgestaltung der Vorrichtung ist gegeben, wenn die einzelnen Segmente als Balken mit einem Kastenprofil ausgebildet sind, in deren Inneres die Gaszufuhr erfolgt, und von denen mindestens eine, die Auflagefläche bildende Wandung porös und/oder perforiert ausgebildet ist. Diese Ausgestaltung erlaubt eine besonders einfache Ausbildung der Segmente und der Abluftöffnungen zwischen den Balken.

Die Balken können durch verschiedenartige Formkörper realisiert werden. Eine besondere Ausgestaltung ergibt sich, wenn die Balken durch einen kastenförmigen porösen Keramikkörper gebildet sind. Derartige Keramikkörper sind handelsüblich und können für sehr hohe Temperaturen, die beim Keramisieren notwendig sind, zur Verfügung gestellt werden.

Um eine besonders starke Strömung an der Auflagefläche zu haben, ist der Keramikkörper mit Ausnahme der die Auflagefläche bildenden Wand mit einem gasundurchlässigen Material umhüllt. So kann beispielsweise der Keramikkörper eine entsprechende Beschichtung tragen oder mit einer Metallfolie ummantelt sein.

Vorzugsweise ist die Vorrichtung so ausgestaltet, daß die Segmente durch Öffnungen in den seitlichen Ofenwänden in den Kaltbereich herausgeführt sind, so daß die Anschlüsse der Druckluft an die Segmente thermisch unbelastet durchgeführt werden können.

Ein besonders wirksames Gasbett ergibt sich, wenn die poröse bzw. perforierte Auflagefläche der Segmente, aus der das Gas ausströmt, mindestens 30 % der Gesamtfläche der Unterlage beträgt.

Die Arbeitsweise der Vorrichtung ist sehr effektiv, wenn ein geschlossener Gaskreislauf vorgesehen ist, bei dem das durch die Abluftöffnungen abgeführte Gas wieder der Gasquelle zurückgeführt wird.

Gemäß einer Ausgestaltung der Erfindung ist ein bezüglich der Glasmittelfläche spiegelsymmetrischer Aufbau der Unterlage vorgesehen, wodurch Ober- und Unterseite unter exakt gleichen thermischen Bedingungen gehalten werden können.

Neben der bereits erwähnten Möglichkeit der Bewegung des Flachglases über einen Druckgradienten in den Segmenten kann auch eine Fortbewegung des Glases durch kontaktierende mechanische Einrichtungen, z.B. Rollen, Schieber, durchgeführt werden.

Zur Vermeidung solcher kontaktierenden mechanischen Einrichtungen, die stets einen eigenen Antrieb benötigen, ist gemäß einer Weiterbildung der Erfindung die Vorrichtung so ausgestaltet, daß die Unterlage mit dem Gasbett in Bewegungsrichtung des Flachglases nach unten geneigt ist. Dadurch rutscht das Flachglas von sich aus aufgrund der Schwerkraft an die tieferliegende Stelle.

Anhand eines in den Zeichnungen beschriebenen Ausführungsbeispieles wird die Erfindung näher beschrieben.

Es zeigen:
- Fig. 1: in einer schematischen Längsschnittdarstellung einen Ofenraum, in dem eine Unterlage für eine Flachglasscheibe aufgestellt ist, die über ein durch die Unterlage erzeugtes Gasbett kontaktlos gehaltert wird,
- Fig. 2: in einer schematischen Draufsichtdarstellung gemäß einer ersten Ausführungsform den Aufbau der Unterlage aus mehreren, beabstandet angeordneten einzelnen Segmenten, die jeweils eine poröse und/oder perforierte Auflagefläche als Gasaustrittsfläche aufweisen und zwischen denen Abluftöffnungen für das Abführen des Gases ausgebildet sind,
- Fig. 3: in einer schematischen Teil-Querschnittdarstellung den Aufbau der einzelnen Segmente durch kastenförmige Keramik-Profilkörper, die mit Ausnahme der oberen Auflagefläche eine gasdichte Ummantelung tragen,
- Fig. 4: ein Diagramm zur Darstellung der Druckverteilung in Längsrichtung der Segmente, und
- Fig. 5: eine zweite Ausführungsform mit einer balkenartig segmentierten Unterlage.

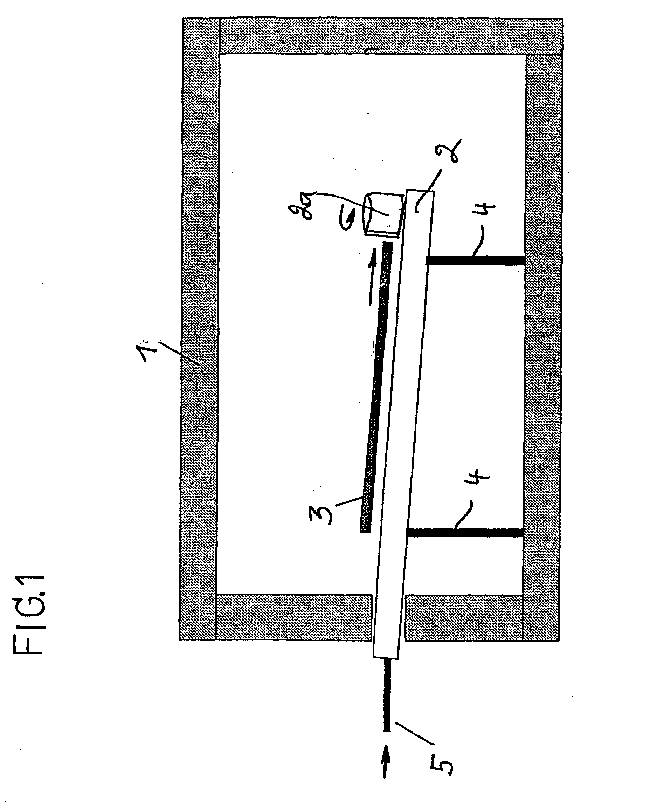

Die Fig. 1 zeigt in einer schematischen Darstellung einen Keramisierungsofen 1, in dem eine erfindungsgemäß ausgebildete Unterlage 2, das später noch zu erläuternde Balkensystem, für die Halterung der zu keramisierenden Grünglasplatte 3, über Stützen 4 angeordnet ist. An der Unterlage 2 ist ein Stutzen 5 für die Zufuhr von einem geeigneten Gas, vorzugsweise von Luft, angeschlossen, die ein Gasbett, d.h. ein Luftkissen unterhalb der Grünglasplatte 3 erzeugt, damit kein störender mechanischer Kontakt zwischen der Unterseite der Grünglasplatte 3 und der Unterlage 2 besteht. Wegen der durch die Anordnung der Stützen 4 vorgegebenen Schräge rutscht die Grünglasplatte 3 während des Keramisierungsvorganges selbsttätig in Pfeilrichtung gegen eine mechanische Transporteinrichtung, z.B. eine Rolle 2 a hin, die die Grünglasplatte senkrecht zur Papierebene fördert.

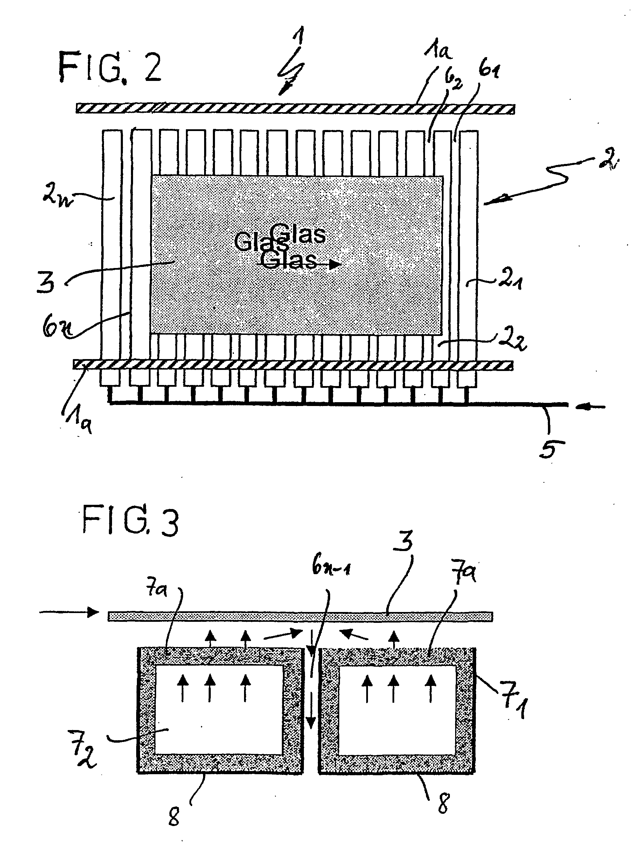

Die Figuren 2 und 3 zeigen die erfindungsgemäß ausgebildete Unterlage 2 für die Grünglasplatte 3, und zwar die Fig. 2 in einer Draufsicht und Fig. 3 in einer Querschnittsansicht. Die Unterlage 2 besteht aus mehreren Segmenten 2₁, 2₂, ..... 2ₙ, an die die Gas- insbesondere Luftzuführung 5 angeschlossen ist, und die einen möglichst flächig homogenen Luftaustritt aufweisen, was über poröse Flächen oder Flächen mit kleinen Perforationen erzielt werden kann. Der Zwischenraum 6₁, 6₂, ..6ₙ zwischen diesen Segmenten, der in der Regel als Schlitz ausgebildet ist, dient der Abluftabfuhr, dargestellt durch einen nach unten gerichteten Pfeil in Fig. 3.

Wie die Fig. 2 zeigt, erstrecken sich diese Segmente und Zwischenräume über die gesamte Ofenbreite, begrenzt durch die Seitenwände 1 a.

Im dargestellten Ausführungsbeispiel nach Fig. 3 werden die luftdurchlässigen Segmente jeweils durch die obere Begrenzung 7 a eines kastenartigen Balkens 7 vorgegeben, die durch ein poröses Material gebildet wird und/oder kleine Öffnungen, d.h. Perforationen aufweist. Wie die Figuren zeigen, spannen diese Segmente, d.h. die oberen Begrenzungen der Balken, relativ schmale luftdurchlässige Flächen auf.

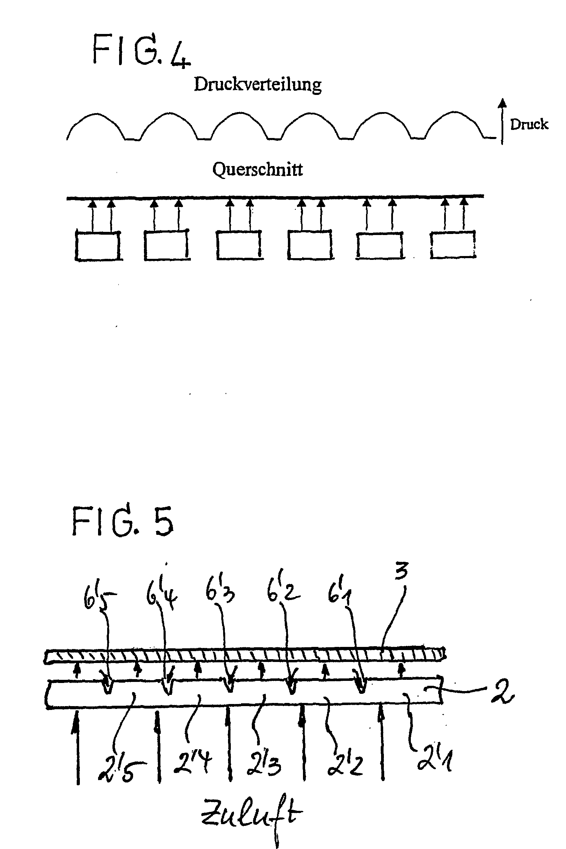

Im Innern dieser nach oben gasdurchlässigen Balken 7₁, 7₂ ..7ₙ wird ein Überdruck eines geeigneten Gases, z.B. Luft, erzeugt, in dem das Innere des Balkens jeweils an eine entsprechende Druckquelle angeschlossen wird. Durch das Ausströmen des Gases aus der oberen Kastenwand 7 a, was dadurch unterstützt wird, indem die anderen Wandungen mit einer gasdichten Umhüllung 8 versehen sind, bildet sich ein Gasfilm zwischen der Balkenoberseite 7 a und dem aufliegendem Glas 3. Die Druckverteilung ist bei Verwendung von porösem Material, wie in Fig. 4 dargestellt, parabolisch und weist keine statischen Druckzonen auf. Das Gas kann in den Zwischenräumen 6₁, 6₂ ...6ₙ zwischen den Balken 7₁, 7₂ ...7ₙ abfließen, so daß kein Gasstau in der Glasmitte entsteht.

Durch die Erfindung werden eine Reihe von Vorteilen erzielt.

Es wird zunächst eine homogene flächige Gaszufuhr ermöglicht, ohne daß Zonen statischen Druckes entstehen. Dies ist sowohl für die Stabilisierung der Schichtdicke der Grünglasplatte als auch für eine Homogenisierung der Temperaturführung von Vorteil. Im Falle von porösen Gasaustrittsflächen tritt eine zusätzliche Homogenisierung der Gastemperatur durch die Wärmetauscherwirkung der porösen Struktur ein.

Es wird ferner durch die Zwischenräume zwischen den Segmenten eine Gasabfuhr auch in den Innenbereichen der aufliegenden Platten gewährleistet, hierdurch wird eine Aufwölbung bzw. die Ausbildung von Zonen statischen Druckes vermieden.

Die bevorzugte Ausführungsform bei Benutzung von, unter Bildung von Zwischenräumen, beabstandet angeordneten, zumindest an der Oberseite perforierten und/oder porösen Balken als Segmenten, hat den Vorteil einer sehr einfachen Konstruktion, insbesondere unter Berücksichtigung der notwendigen Temperaturen von bis zu 950° C und höher. Wesentlicher Punkt hierfür ist, daß poröse Balken z.B. aus temperaturbeständigen Keramiken, kommerziell erhältlich sind und bei Herausführung der Balken aus dem Heißbereich des Ofens, wie in Fig. 2 dargestellt, die restliche Konstruktion nur niedrigen Temperaturen ausgesetzt ist und entsprechend einfacher ausgebildet sein kann.

In der Fig. 5 ist eine zweite Ausführungsform der Erfindung dargestellt, mit einer Unterlage 2' aus porösem Material, die balkenartig strukturiert ist. Durch kanalartige Strukturen in der Unterlage werden poröse Segmente 2'₁, 2'₂, 2'₃, 2'₄, 2'₅, ..2'ₙ sowie Abluftöffnungen 6'₁, 6'₂, 6'₃, 6'₄, 6'₅, ..6'ₙ vorgegeben. Durch die Segmente strömt die tragende Zuluft, das Gas, wogegen über die Abluftöffnungen das Gas abgeleitet wird.

Die Porosität liegt bei den Ausführungsbeispielen für einen bevorzugten Werkstoff bei ca. 15 %.

Die Durchmesser von alternativen Perforationsöffnungen liegt bei 0,5 - 1 mm.

## Patentansprüche

1. Verfahren zum kontaktlosen Lagern und Transportieren von heißem Flachglas bei der Glasherstellung auf einem Gasbett, das über einer gasdurchlässigen Auflagefläche einer Unterlage aufgebaut wird, indem ein Gas durch die Auflagefläche hindurchgeleitet wird, **dadurch gekennzeichnet, daß** das Gas zur Erzielung einer flächig homogenen Gaszufuhr durch beabstandete flächige poröse und/oder perforierte Segmente der Auflagefläche hindurchgepreßt wird und das Gas in den Zwischenräumen zwischen den Segmenten abgeleitet wird.

2. Verfahren nach Anspruch 1, bei dem als Gas Druckluft verwendet wird.

3. Verfahren nach Anspruch 1 oder Anspruch 2, bei dem das aufliegende Glas zumindest zeitweise eine Viskosität von ≤ 10¹³ dPas entsprechend dem oberen Kühlpunkt oder ≤ 10^{14,5} dPas entsprechend dem unteren Kühlpunkt aufweist.

4. Verfahren nach Anspruch 1, bei dem das Glas zumindest auf seiner Unterseite eine Oberflächenstruktur, beispielsweise Noppen und/oder ein Dekor aufweist.

5. Verfahren nach einem der Ansprüche 1 bis 4, bei dem während der Behandlung des Glases ein definiertes aufsteigendes und/oder absteigendes Temperaturprofil durchfahren wird.

6. Verfahren nach Anspruch 5, bei dem ein Temperaturprofil durchfahren wird, durch das das Glas auf dem Gasbett keramisiert wird.

7. Verfahren nach Anspruch 6, bei dem das Glas während der Keramisierung über dem Gasbett bewegt wird.

8. Verfahren nach Anspruch 6 oder 7, bei dem zur Einhaltung der zur Keramisierung erforderlichen Temperaturhomogenität vorgeheiztes Gas verwendet wird.

9. Verfahren nach Anspruch 8, bei dem die Temperierung des Gases während der Keramisierung zumindest vorwiegend während des Durchströmens durch poröse und/oder perforierte Auflage-Segmente erfolgt und damit die für die Keramisierung notwendige Temperaturhomogenität erreicht wird.

10. Verfahren nach einem der Ansprüche 6 bis 9, bei dem das Gas nur über zunderfreies Material zugeführt wird.

11. Verfahren nach einem der Ansprüche 1 bis 10, bei dem der Gasdruck in den einzelnen Segmenten unabhängig voneinander zeitlich veränderlich eingestellt bzw. geregelt wird.

12. Verfahren nach Anspruch 11, bei dem ein Druckgradient entlang der Bewegungsrichtung des Glases erzeugt wird.

13. Verfahren nach einem der Ansprüche 1 bis 12, bei dem ein Gasbett mit einer Schwebehöhe zwischen 30 µm und 1 - 3 mm erzeugt wird.

14. Vorrichtung zum Durchführen der Verfahren nach einem der Ansprüche 1 bis 13, mit einer in einem Ofen (1) angeordneten gasdurchlässigen Unterlage (2) als Auflagefläche für das kontaktlos zu lagernde und transportierende Flachglas (3), die einen Anschluß (5) für die Zufuhr von unter Druck stehendem Gas besitzt, das durch die gasdurchlässige Unterlage zum Aufbau eines Gasbettes zwischen dem Flachglas und der Unterlage hindurch und danach wieder abgeleitet wird, **dadurch gekennzeichnet, daß** die Unterlage (2) aus mehreren beabstandeten Segmenten (2₁, 2₂ ...2ₙ) besteht, die jeweils eine poröse und/oder perforierte Auflagefläche (7 a) als Gasaustrittsfläche aufweisen und zwischen denen Abluftöffnungen (6₁, 6₂ ...6ₙ) für das Abführen des Gases ausgebildet sind.

15. Vorrichtung nach Anspruch 14, **dadurch gekennzeichnet, daß** die Segmente sich über die gesamte Breite des zu behandelnden Flachglases erstrecken.

16. Vorrichtung nach Anspruch 14 oder 15, **dadurch gekennzeichnet, daß** die Segmente durch separate Formkörper (7) gebildet sind.

17. Vorrichtung nach Anspruch 16, **dadurch gekennzeichnet, daß** die Abluftöffnungen (6₁, 6₂, ...6ₙ) als Schlitze zwischen den beabstandet angeordneten separaten Segmenten ausgebildet sind.

18. Vorrichtung nach Anspruch 16 oder 17, **dadurch gekennzeichnet, daß** die einzelnen Segmente (2₁, 2₂, ..2ₙ) als Balken (7₁, 7₂ ..7ₙ) mit einem Kastenprofil ausgebildet sind, in deren Inneres die Gaszufuhr erfolgt, und von denen mindestens eine, die Auflagefläche bildende Wandung (7 a) porös und/oder perforiert ausgebildet ist.

19. Vorrichtung nach Anspruch 18, **dadurch gekennzeichnet, daß** die Balken (7₁, 7₂ ..7ₙ) durch einen kastenförmigen porösen Keramikkörper gebildet sind.

20. Vorrichtung nach Anspruch 19, **dadurch gekennzeichnet, daß** der Keramikkörper mit Ausnahme der die Auflagefläche bildenden Wand (7 a) mit einem gasundurchlässigen Material (8) umhüllt ist.

21. Vorrichtung nach Anspruch 14 oder 15, **dadurch gekennzeichnet, daß** die Segmente durch eine balkenförmige Segmentierung eines porösen Formkörpers gebildet sind, indem im Formkörper auf dessen Oberseite kanalartige Abluftstrukturen ausgebildet sind.

22. Vorrichtung nach einem der Ansprüche 14 bis 21, **dadurch gekennzeichnet, daß** die Segmente durch Öffnungen in den seitlichen Ofenwänden (1 a) in den Kaltbereich herausgeführt sind.

23. Vorrichtung nach einem der Ansprüche 14 bis 22, **dadurch gekennzeichnet, daß** die poröse bzw. perforierte Auflagefläche (7 a) der Segmente, aus der Gas ausströmt, mindestens 30 % der Gesamtfläche der Unterlage (2) beträgt.

24. Vorrichtung nach einem der Ansprüche 14 bis 23, **dadurch gekennzeichnet, daß** ein geschlossener Gaskreislauf vorgesehen ist, bei dem das durch die Abluftöffnungen (6₁, 6₂ ..6ₙ) abgeführte Gas wieder der Gasquelle zurückgeführt wird.

25. Vorrichtung nach einem der Ansprüche 14 bis 24, **gekennzeichnet durch** einen bezüglich der Glasmittelfläche spiegelsymmetrischen Aufbau der Unterlage (2).

26. Vorrichtung nach einem der Ansprüche 14 bis 25, **dadurch gekennzeichnet, daß** die Unterlage (2) senkrecht zur Bewegungsrichtung des Flachglases schräg nach unten geneigt ist und am Tiefpunkt eine Transporteinrichtung (2 a) aufweist.

## Claims

1. Method for storing and transporting hot flat glass in a contactless manner during glass manufacture on a gas bed which is built up over a gas-permeable supporting surface of a base, in that a gas is passed through the supporting surface, **characterized in that**, to achieve a gas supply which is homogeneous over a surface area, the gas is forced through spaced-apart area-like porous and/or perforated segments of the supporting surface and the gas in the intermediate spaces between the segments is directed away.

2. Method according to Claim 1, in which compressed air is used as the gas.

3. Method according to Claim 1 or Claim 2, in which the supported glass has at least for a certain time a viscosity of ≤ 10¹³ dPas, corresponding to the upper cooling point, or ≤ 10^{14.5} dPas, corresponding to the lower cooling point.

4. Method according to Claim 1, in which the glass has at least on its underside a surface structure, for example dimples, and/or a decoration.

5. Method according to one of Claims 1 to 4, in which a defined rising and/or falling temperature profile is passed through during the treatment of the glass.

6. Method according to Claim 5, in which a temperature profile by which the glass on the gas bed is ceramized is passed through.

7. Method according to Claim 6, in which the glass is moved over the gas bed during the ceramization.

8. Method according to Claim 6 or 7, in which preheated gas is used to maintain the temperature homogeneity required for the ceramization.

9. Method according to Claim 8, in which the temperature control of the gas during the ceramization takes place at least predominantly as it flows through porous and/or perforated supporting segments and the temperature homogeneity necessary for the ceramization is achieved in this way.

10. Method according to one of Claims 6 to 9, in which the gas is supplied only over scale-free material.

11. Method according to one of Claims 1 to 10, in which the gas pressure in the individual segments is set or regulated variably over time, independently of one another.

12. Method according to Claim 11, in which a pressure gradient is produced along the direction of movement of the glass.

13. Method according to one of Claims 1 to 12, in which a gas bed with a suspension height of between 30 microns and 1 - 3 mm is produced.

14. Device for carrying out the methods according to one of Claims 1 to 13, with a gas-permeable base (2) arranged in a furnace (1) as a supporting surface for the flat glass (3) to be stored and transported in a contactless manner, which base has a connection (5) for the supply of gas under pressure, which is directed through the gas-permeable base for building up a gas bed between the flat glass and the base and after that is directed away again, **characterized in that** the base (2) comprises a number of spaced-apart segments (2₁, 2₂,...2ₙ), which respectively have a porous and/or perforated supporting surface (7 a) as a gas outlet surface and between which air vents (6₁, 6₂,...6ₙ) for discharging the gas are formed.

15. Device according to Claim 14, **characterized in that** the segments extend over the entire width of the flat glass to be handled.

16. Device according to Claim 14 or 15, **characterized in that** the segments are formed by separate shaped bodies (7).

17. Device according to Claim 16, **characterized in that** the air vents (6₁, 6₂, ...6ₙ) are formed as slits between the separate segments arranged spaced apart.

18. Device according to Claim 16 or 17, **characterized in that** the individual segments (2₁, 2₂,...2ₙ) are formed as bars (7₁, 7₂,...7ₙ) with a box profile, in the interior of which the gas supply takes place, and of which at least one wall (7 a), forming the supporting surface, is formed such that it is porous and/or perforated.

19. Device according to Claim 18, **characterized in that** the bars (7₁, 7₂,...7ₙ) are formed by a box-shaped porous ceramic body.

20. Device according to Claim 19, **characterized in that** the ceramic body is enclosed by a gas-impermeable material (8) with the exception of the wall (7 a) forming the supporting surface.

21. Device according to Claim 14 or 15, **characterized in that** the segments are formed by a bar-shaped segmentation of a porous shaped body, **in that** channel-like air-venting structures are formed in the shaped body, on its upper side.

22. Device according to one of Claims 14 to 21, **characterized in that** the segments are led out into the cold region through openings in the lateral furnace walls (1 a).

23. Device according to one of Claims 14 to 22, **characterized in that** the porous or perforated supporting surface (7 a) of the segments from which gas flows out amounts to at least 30% of the overall surface area of the base (2).

24. Device according to one of Claims 14 to 23, **characterized in that** a closed gas cycle is provided, in which the gas discharged through the air vents (6₁, 6₂, ...6ₙ) is returned again to the gas source.

25. Device according to one of Claims 14 to 24, **characterized by** a structure of the base (2) that is mirror-symmetrical with respect to the middle area of the glass.

26. Device according to one of Claims 14 to 25, **characterized in that** the base (2) is inclined obliquely downwards perpendicularly in relation to the direction of movement of the flat glass and has at the lowest point a transporting device (2 a).

## Revendications

1. Procédé pour le stockage et le transport sans contact de verre plat chaud lors de la fabrication du verre sur un lit de gaz, qui est établi au-dessus d'une surface de dépôt perméable au gaz d'un support, dans lequel un gaz est conduit à travers la surface de dépôt, **caractérisé en ce que** le gaz est refoulé à travers des segments plats poreux et/ou perforés espacés dans la surface de dépôt en vue d'obtenir une arrivée de gaz homogène dans la surface et **en ce que** le gaz est évacué dans les espaces intermédiaires entre les segments.

2. Procédé selon la revendication 1, **caractérisé en ce que** l'on utilise comme gaz de l'air comprimé.

3. Procédé selon la revendication 1 ou la revendication 2, dans lequel le verre déposé présente au moins temporairement une viscosité de ≤ 10¹³ dPa.s correspondant au point de refroidissement supérieur ou de ≤ 10^{14,5} dPa.s correspondant au point de refroidissement inférieur.

4. Procédé selon la revendication 1, dans lequel le verre présente au moins sur sa face inférieure une structure de surface, par exemple des bosses et/ou une décoration.

5. Procédé selon l'une quelconque des revendications 1 à 4, dans lequel un profil de température défini, croissant et/ou décroissant, est parcouru pendant le traitement du verre.

6. Procédé selon la revendication 5, dans lequel on parcourt un profil de température, par lequel le verre est céramisé sur le lit de gaz.

7. Procédé selon la revendication 6, dans lequel le verre est déplacé sur le lit de gaz pendant la céramisation.

8. Procédé selon la revendication 6 ou 7, dans lequel on utilise un gaz préchauffé pour respecter l'homogénéité de la température nécessaire pour la céramisation.

9. Procédé selon la revendication 8, dans lequel on effectue l'équilibrage de la température du gaz pendant la céramisation au moins principalement pendant l'écoulement à travers des segments de dépôt poreux et/ou perforés et afin d'atteindre l'homogénéité de la température nécessaire pour la céramisation.

10. Procédé selon l'une quelconque des revendications 6 à 9, dans lequel le gaz n'est fourni que par une matière sans calamine.

11. Procédé selon l'une quelconque des revendications 1 à 10, dans lequel la pression du gaz dans les divers segments indépendamment les uns des autres est réglée ou régulée de façon variable dans le temps.

12. Procédé selon la revendication 11, dans lequel on produit un gradient de pression le long de la direction de déplacement du verre.

13. Procédé selon l'une quelconque des revendications 1 à 12, dans lequel on produit un lit de gaz avec une hauteur de soulèvement comprise entre 30 µm et 1 - 3 mm.

14. Dispositif pour la mise en oeuvre des procédés selon l'une quelconque des revendications 1 à 13, avec un support (2) perméable au gaz disposé dans un four (1), servant de surface de dépôt pour le verre plat (3) à stocker et à transporter sans contact, support qui possède un raccord (5) pour l'arrivée de gaz sous pression qui est introduit puis évacué à travers le support perméable au gaz pour l'établissement d'un lit de gaz entre le verre plat et le support, **caractérisé en ce que** le support (2) se compose de plusieurs segments espacés (2₁, 2₂, ... 2ₙ) qui présentent chacun une surface de dépôt (7a) poreuse et/ou perforée servant de surface de sortie du gaz et entre lesquels sont formées des ouvertures d'échappement (6₁, 6₂, ... 6ₙ) pour l'évacuation du gaz.

15. Dispositif selon la revendication 14, **caractérisé en ce que** les segments s'étendent sur toute la largeur du verre plat à traiter.

16. Dispositif selon la revendication 14 ou 15, **caractérisé en ce que** les segments sont formés par des corps façonnés séparés (7).

17. Dispositif selon la revendication 16, **caractérisé en ce que** les ouvertures d'échappement (6₁, 6₂, ... 6ₙ) sont formées par des fentes entre les segments séparés disposés à distance l'un de l'autre.

18. Dispositif selon la revendication 16 ou 17, **caractérisé en ce que** les segments individuels (2₁, 2₂, ... 2ₙ) sont formés par des poutres (7₁, 7₂, ... 7ₙ) à profil en caisson, à l'intérieur desquelles on effectue l'arrivée de gaz, et dont au moins une paroi (7a) formant la surface de dépôt est poreuse et/ou perforée.

19. Dispositif selon la revendication 18, **caractérisé en ce que** les poutres (7₁, 7₂, ... 7ₙ) sont formées par un corps céramique poreux en forme de caisson.

20. Dispositif selon la revendication 19, **caractérisé en ce que** le corps céramique est enveloppé d'une matière imperméable au gaz (8), à l'exception de la paroi (7a) formant la surface de dépôt.

21. Dispositif selon la revendication 14 ou 15, **caractérisé en ce que** les segments sont formés par une segmentation en forme de poutres d'un corps façonné poreux, dans lequel des structures d'échappement en forme de canal sont formées sur la face supérieure du corps façonné.

22. Dispositif selon l'une quelconque des revendications 14 à 21, **caractérisé en ce que** les segments sortent à travers des ouvertures dans les parois latérales (1a) du four dans la zone froide.

23. Dispositif selon l'une quelconque des revendications 14 à 22, **caractérisé en ce que** la surface de dépôt poreuse et/ou perforée (7a) des segments, par laquelle le gaz sort, vaut au moins 30% de la surface totale du support (2).

24. Dispositif selon l'une quelconque des revendications 14 à 23, **caractérisé en ce qu'**il est prévu un circuit fermé de gaz, dans lequel le gaz évacué par les ouvertures d'échappement (6₁, 6₂, ... 6ₙ) est à nouveau renvoyé à la source de gaz.

25. Dispositif selon l'une quelconque des revendications 14 à 24, **caractérisé par** une structure du support (2) symétrique par rapport à la face centrale du verre.

26. Dispositif selon l'une quelconque des revendications 14 à 25, **caractérisé en ce que** le support (2) est incliné en oblique vers le bas perpendiculairement à la direction de déplacement du verre plat et présente un dispositif de transport (2a) à son point le plus bas.
